# EUROPÄISCHE PATENTANMELDUNG

(11) **EP 0 629 475 A1**
(43) Veröffentlichungstag der Anmeldung: **21.12.1994**
(21) Anmeldenummer: 94108853.6
(22) Anmeldetag: 09.06.1994
(51) Int. Cl.: B25J 9/04, B25J 9/10

(54) **Knickarmvorrichtung für Handhabungsautomaten und Industrieroboter**

(30) Priorität: 15.06.1993 CH 1785/93
(71) Anmelder: Robotec Consulting AG, CH-8222 Berlingen (CH)
(72) Erfinder: Zingel, Heinz, CH-8222 Beringen (CH)
(74) Vertreter: Petschner, Goetz

(57) **Zusammenfassung**

Die Knickarmvorrichtung für Handhabungsautomaten und Industrieroboter umfasst einen motorisch um eine ortsfeste Achse (1) schwenkbaren Stellhebel (2), an dessen anderem Ende ein Zwischenhebel (4) über eine am Stellhebel (2) drehbar abgestützte Welle (3) verschwenkbar angelenkt ist, wobei am anderen Ende des Zwischenhebels (4) der in linearer Richtung bewegbare Hebelarm (5) auf einer am Zwischenhebel (4) drehbar abgestützten Welle (6) und mit dieser verschwenkbar aufsitzt und wobei an der mit dem Zwischenhebel (4) drehfest verbundenen Welle (3) und an der mit dem Hebelarm (5) drehfest verbundenen Welle (6) von der Schwenkbewegung des Stellhebels (2) abhängige Nachlaufgetriebemittel (7-13) wirksam sind.

Diese Massnahmen gewährleisten eine sehr einfache Konzeption einer Knickarmvorrichtung mit einer absolut linearen, durch die Nachlaufgetriebemittel bewirkten Bewegung des die Werkzeugmittel tragenden Hebelarmes über eine relativ grosse Hublänge.

## Beschreibung

Die vorliegende Erfindung betrifft eine Knickarmvorrichtung für Handhabungsautomaten und Industrieroboter, mit einem freien, an Hebelmitteln verschwenkbar abgestützten, einen Greifer oder Zusatzanordnungen tragenden, in linearer Richtung bewegbaren Hebelarm.

In der Automationstechnik sind Systeme gefragt, die gestatten, mit minimalem Aufwand einen grossen linearen Hub zu erreichen. Hierfür sind bereits Lösungen bekannt geworden, bei welchen jeder Hebel eines Hebelsystems im Drehpunkt durch einen Stellmotor bewegt wird.

Ohne Frage verlangen solche Knickarmvorrichtungen einen hohen technischen Aufwand und insbesondere eine aufwendige Programmsteuerung der Stellmotoren, um überhaupt eine lineare Bewegung des das Werkzeug tragenden Hebelarmes zu erreichen.

Es ist deshalb Aufgabe der vorliegenden Erfindung, eine Knickarmvorrichtung der vorgenannten Art zu schaffen, welche am werkzeugtragenden Hebelarm eine lineare Bewegung über eine relativ grosse Wegstrecke erlaubt bei geringstem und wartungsarmem technischen Aufwand.

Dies wird erfindungsgemäss zunächst erreicht durch einen motorisch um eine ortsfeste Achse schwenkbaren Stellhebel, an dessen anderem Ende ein Zwischenhebel über eine am Stellhebel drehbar abgestützte Welle verschwenkbar angelenkt ist, wobei am anderen Ende des Zwischenhebels der in linearer Richtung bewegbare Hebelarm auf einer am Zwischenhebel drehbar abgestützten Welle und mit dieser verschwenkbar aufsitzt und wobei an der mit dem Zwischenhebel drehfest verbundenen Welle und an der mit dem Hebelarm drehfest verbundenen Welle von der Schwenkbewegung des Stellhebels abhängige Nachlaufgetriebemittel wirksam sind.

Bereits diese Massnahmen gewährleisten eine sehr einfache Konzeption einer Knickarmvorrichtung mit einer absolut linearen, durch die Nachlaufgetriebemittel bewirkten Bewegung des die Werkzeugmittel tragenden Hebelarmes über eine relativ grosse Hublänge.

Konstruktiv ist es dabei von Vorteil, wenn die Bewegungsebenen von Stellhebel, Zwischenhebel und Hebelarm übereinanderliegen.

Zweckmässig ist zudem, wenn die Nachlaufgetriebemittel Zahnriemengetriebe sind, wobei dann der Stellhebel und der Zwischenhebel kastenförmig ausgebildet sind zur innenliegenden Aufnahme der Zahnriemengetriebe.

Hierbei besteht eine weitere vorteilhafte Ausgestaltung der erfindungsgemässen Knickarmvorrichtung darin, dass das Zahnriemengetriebe zur Erzeugung einer Nachlaufbewegung des Zwischenhebels ein erstes, drehfest auf der ortsfesten Achse aufsitzendes Zahnrad sowie ein zweites, drehfest auf der den Zwischenhebel tragenden Welle aufsitzendes Zahnrad umfasst, welche beiden Zahnräder von einem Zahnriemen umschlossen sind, und ferner, dass das Zahnriemengetriebe zur Erzeugung einer Nachlaufbewegung des in linearer Richtung bewegbaren Hebelarms ein erstes, drehfest auf einer, zur den Zwischenhebel tragenden Welle koaxialen, drehfest am Stellhebel angeordneten Achse aufsitzendes Zahnrad sowie ein zweites, drehfest auf der den Hebelarm tragenden Welle aufsitzendes Zahnrad umfasst, welche beiden Zahnräder von einem weiteren Zahnriemen umschlossen sind.

Eine bevorzugte Ausführungsform der erfindungsgemässen Knickarmvorrichtung kann ferner darin gesehen werden, wenn das Übersetzungsverhältnis des Zahnriemengetriebes zur Erzeugung der Nachlaufbewegung des Zwischenhebels zweizueins und das Übersetzungsverhältnis des Zahnriemengetriebes zur Erzeugung einer Nachlaufbewegung des Hebelarms einszuzwei ist. Hierbei ist zudem vorteilhaft, wenn die Achsabstände am Stellhebel resp. am Zwischenhebel gleich sind.

Eine beispielsweise Ausführungsform der erfindungsgemässen Knickarmvorrichtung ist nachfolgend anhand der Zeichnung näher erläutert. Es zeigen:
- Fig. 1: im Querschnitt in schematischer Darstellung eine Knickarmvorrichtung der Erfindung;
- Fig. 2: die Anordnung gemäss Fig. 1 in Draufsicht, in verschiedenen Arbeitsstellungen, in kleinerem Massstab; und
- Fig.3: eine Anwendungsform der Anordnung gemäss Fig. 1 und 2 an einem Handhabungsautomaten.

Die Knickarmvorrichtung für Handhabungsautomaten und Industrieroboter umfasst einen motorisch um eine ortsfeste Achse 1 schwenkbaren Stellhebel 2, an dessen anderem Ende ein Zwischenhebel 4 über eine am Stellhebel 2 drehbar abgestützte Welle 3 verschwenkbar angelenkt ist, wobei am anderen Ende des Zwischenhebels 4 der in linearer Richtung bewegbare Hebelarm 5 auf einer am Zwischenhebel 4 drehbar abgestützten Welle 6 und mit dieser verschwenkbar aufsitzt und wobei an der mit dem Zwischenhebel 4 drehfest verbundenen Welle 3 und an der mit dem Hebelarm 5 drehfest verbundenen Welle 6 von der Schwenkbewegung des Stellhebels 2 abhängige Nachlaufgetriebemittel wirksam sind, wie das nachfolgend noch näher erläutert ist.

Hierbei ist es von Vorteil, wenn die Bewegungsebenen von Stellhebel 2, Zwischenhebel 4 und Hebelarm 5 übereinanderliegen.

Die Nachlaufgetriebemittel sind hier Zahnriemengetriebe, wobei der Stellhebel 2 und der Zwischenhebel 4 kastenförmig ausgebildet sind zur innenliegenden Aufnahme dieser Zahnriemengetriebe.

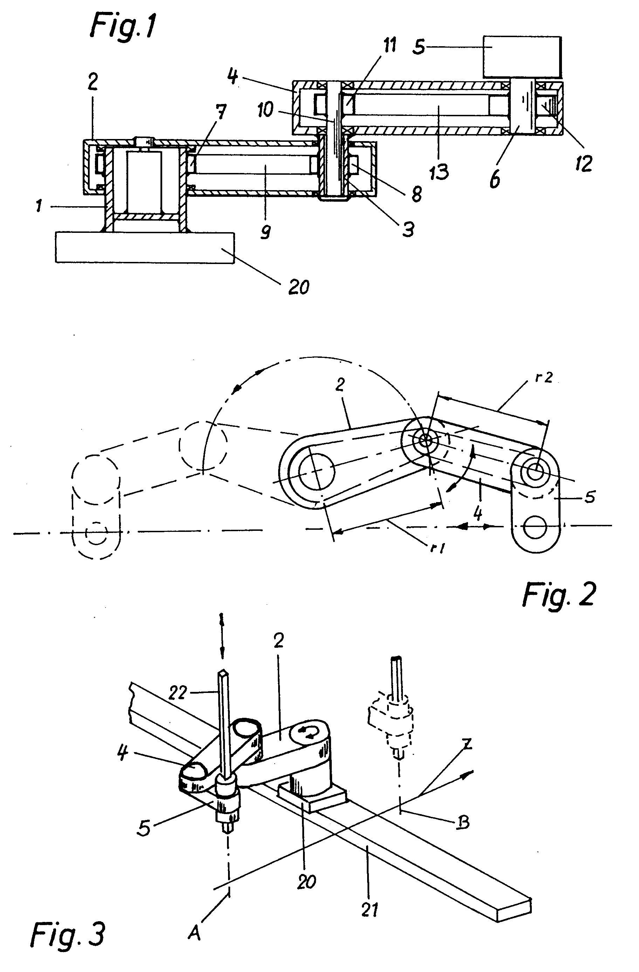

Gemäss den Fig. 1 und 2 umfasst das Zahnriemengetriebe zur Erzeugung einer Nachlaufbewegung des Zwischenhebels 4 ein erstes, drehfest auf der ortsfesten Achse 1 aufsitzendes Zahnrad 7 sowie ein zweites, drehfest auf der den Zwischenhebel 4 tragenden Welle 3 aufsitzendes Zahnrad 8, welche beiden Zahnräder 7,8 von einem Zahnriemen 9 umschlossen sind. Das Zahnriemengetriebe zur Erzeugung einer Nachlaufbewegung des in linearer Richtung bewegbaren Hebelarms 5 hingegen umfasst ein erstes, drehfest auf einer, zur den Zwischenhebel 4 tragenden Welle 3 koaxialen, drehfest am Stellhebel 2 angeordneten Achse 10 aufsitzendes Zahnrad 11 sowie ein zweites, drehfest auf der den Hebelarm 5 tragenden Welle 6 aufsitzendes Zahnrad 12, welche beiden Zahnräder 11,12 von einem weiteren Zahnriemen 13 umschlossen sind.

Die drehfest am Stellhebel 2 angeordnete koaxiale Achse 10 ist somit relativ funktionell der ortsfesten Achse 1 für diesen Stellhebel 2.

Aus dem Vorbeschriebenen ergibt sich weiter eine nunmehr funktionssichere, robuste, einfache, praktisch wartungsfreie Konzeption.

Vorteilhaft ist hierbei, wenn das Übersetzungsverhältnis des Zahnriemengetriebes zur Erzeugung der Nachlaufbewegung des Zwischenhebels 4 zweizueins und das Übersetzungsverhältnis des Zahnriemengetriebes zur Erzeugung einer Nachlaufbewegung des Hebelarms 5 einszuzwei ist. Ferner sind hier die Achsabstände r1 resp. r2 am Stellhebel 2 resp. am Zwischenhebel 4 gleich.

Wie Fig. 2 und 3 deutlich machen, verschiebt sich durch diese Massnahmen beim Verdrehen des Stellhebels 2 aus seiner einen Endlage 0° in seine andere Endlage 180° der werkzeugtragende Hebelarm 5 unter der Wirkung des Zwischenhebels 4 und der genannten Zahnradgetriebe von der Stelle A nach der Stelle B absolut entlang einer Geraden Z mit einer Hublänge von 2(r1 + r2), wofür hier aber nur, nachdem sich Stellhebel 2 und Zwischenhebel 4 "überlaufen", eine Durchlaufbreite von A nach B von r1 plus Auskragung des freien Hebelarmes 5 erforderlich ist, was die hier erreichte kompakte Bauweise verdeutlicht.

Damit lassen sich aber auch die Zykluszeiten erheblich senken, da die Nachlaufgetriebemittel eine sehr schnelle, sinusharmonische Verstellung erlauben.

Wie Fig. 3 weiter zeigt, kann die vorbeschriebene Knickarmvorrichtung individuell eingesetzt werden. Beispielsweise kann die Knickarmvorrichtung über einen Schlitten 20 auf einer Schiene 21 verschiebbar sein und der Hebelarm 5 ein vertikal verstellbares Greiferwerkzeug 22 tragen.

Natürlich ergeben sich eine Reihe von Modifikationen, ohne dabei den Erfindungsgedanken zu verlassen. Beispielsweise können die Zahnriemengetriebemittel durch andere Nachlaufsteuermittel ersetzt werden, oder können Stellhebel 2 und Zwischenhebel 4 von unterschiedlicher Länge sein. Ferner kann die erfindungsgemässe Knickarmvorrichtung natürlich mit weiteren gleichen oder anderen Stellmitteln kombiniert werden.

Es wird Schutz beansprucht wie folgt:

## Patentansprüche

1. Knickarmvorrichtung für Handhabungsautomaten und Industrieroboter, mit einem freien, an Hebelmitteln verschwenkbar abgestützten, einen Greifer oder Zusatzanordnungen tragenden, in linearer Richtung bewegbaren Hebelarm, gekennzeichnet durch einen motorisch um eine ortsfeste Achse (1) schwenkbaren Stellhebel (2), an dessen anderem Ende ein Zwischenhebel (4) über eine am Stellhebel (2) drehbar abgestützte Welle (3) verschwenkbar angelenkt ist, wobei am anderen Ende des Zwischenhebels (4) der in linearer Richtung bewegbare Hebelarm (5) auf einer am Zwischenhebel (4) drehbar abgestützten Welle (6) und mit dieser verschwenkbar aufsitzt und wobei an der mit dem Zwischenhebel (4) drehfest verbundenen Welle (3) und an der mit dem Hebelarm (5) drehfest verbundenen Welle (6) von der Schwenkbewegung des Stellhebels (2) abhängige Nachlaufgetriebemittel (7-13) wirksam sind.

2. Knickarmvorrichtung nach Anspruch 1, dadurch gekennzeichnet, dass die Bewegungsebenen von Stellhebel (2), Zwischenhebel (4) und Hebelarm (5) übereinanderliegen.

3. Knickarmvorrichtung nach Anspruch 1, dadurch gekennzeichnet, dass die Nachlaufgetriebemittel (7-13) Zahnriemengetriebe sind.

4. Knickarmvorrichtung nach den Ansprüchen 1 bis 3, dadurch gekennzeichnet, dass der Stellhebel (2) und der Zwischenhebel (4) kastenförmig ausgebildet sind zur innenliegenden Aufnahme der Zahnriemengetriebe (7-9 resp. 11-13).

5. Knickarmvorrichtung nach Anspruch 3, dadurch gekennzeichnet, dass das Zahnriemengetriebe zur Erzeugung einer Nachlaufbewegung des Zwischenhebels (4) ein erstes, drehfest auf der ortsfesten Achse (1) aufsitzendes Zahnrad (7) sowie ein zweites, drehfest auf der den Zwischenhebel (4) tragenden Welle (3) aufsitzendes Zahnrad (8) umfasst, welche beiden Zahnräder (7,8) von einem Zahnriemen (9) umschlossen sind, und ferner, dass das Zahnriemengetriebe zur Erzeugung einer Nachlaufbewegung des in linearer Richtung bewegbaren Hebelarms (5) ein erstes, drehfest auf einer, zur den Zwischenhebel (4) tragenden Welle (3) koaxialen, drehfest am Stellhebel (2) angeordneten Achse (10) aufsitzendes Zahnrad (11) sowie ein zweites, drehfest auf der den Hebelarm (5) tragenden Welle (6) aufsitzendes Zahnrad (12) umfasst, welche beiden Zahnräder (11,12) von einem weiteren Zahnriemen (13) umschlossen sind.

6. Knickarmvorrichtung nach Anspruch 5, dadurch gekennzeichnet, dass das Übersetzungsverhältnis des Zahnriemengetriebes zur Erzeugung der Nachlaufbewegung des Zwischenhebels (4) zweizueins und das Übersetzungsverhältnis des Zahnriemengetriebes zur Erzeugung einer Nachlaufbewegung des Hebelarms (5) einszuzwei ist.

7. Knickarmvorrichtung nach einem oder mehreren der vorangehenden Ansprüche 1 bis 6, dadurch gekennzeichnet, dass die Achsabstände (r1 resp. r2) am Stellhebel (2) resp. am Zwischenhebel (4) gleich sind.
